Europäisches Patentamt

European Patent Office

Office européen des brevets

(11) Veröffentlichungsnummer: **0 327 721 B1**

(12) **EUROPÄISCHE PATENTSCHRIFT**

(45) Veröffentlichungstag der Patentschrift: **15.04.92**

(21) Anmeldenummer: **88121565.1**

(22) Anmeldetag: **23.12.88**

(51) Int. Cl.5: **C04B 35/10**, C04B 38/00, B01J 21/04, B01J 37/00

(54) **Presslinge auf Basis von pyrogen hergestelltem Aluminiumoxid, Verfahren zu ihrer Herstellung und ihre Verwendung.**

(30) Priorität: **09.02.88 DE 3803897**

(43) Veröffentlichungstag der Anmeldung:
**16.08.89 Patentblatt 89/33**

(45) Bekanntmachung des Hinweises auf die
Patenterteilung:
**15.04.92 Patentblatt 92/16**

(84) Benannte Vertragsstaaten:
**AT BE CH DE ES FR GB GR IT LI LU NL SE**

(56) Entgegenhaltungen:
**DE-B- 1 062 689**
**FR-A- 2 413 323**
**US-A- 3 033 801**
**US-A- 3 856 708**

(73) Patentinhaber: **Degussa Aktiengesellschaft**
**Weissfrauenstrasse 9**
**W-6000 Frankturt am Main 1(DE)**

(72) Erfinder: **Deller, Klaus, Dr.**
**Friedhofstrasse 47**
**W-6452 Hainburg(DE)**
Erfinder: **Klingel, Reinhard, Dr.**
**Taunusstrasse 6**
**W-8755 Alzenau(DE)**
Erfinder: **Krause, Helmfried**
**Odenwaldstrasse 39**
**W-6458 Rodenbach(DE)**

**Beschreibung**

Die Erfindung betrifft Preßlinge auf Basis von pyrogen hergestelltem Aluminiumoxid, das Verfahren zu ihrer Herstellung und ihre Verwendung als Katalysatorträger und Katalysator.

Pyrogen hergestellte Oxide zeichnen sich durch extreme Feinteiligkeit und entsprechend hohe spezifische Oberflächen, sehr hohe Reinheit, sphärische Teilchenform und das Fehlen von Poren aus. Aufgrund dieser Eigenschaften finden die pyrogen hergestellten Oxide zunehmend Interesse als Träger für Katalysatoren (D. Koth, H. Ferch, Chem. Ing. Techn. 52, 628 (1980).

Da pyrogen hergestellte Oxide besonders feinteilig sind, bereitet die Verformung zu Katalysatorträgern einige Schwierigkeiten.

Aus der DE-OS 31 32 674 ist ein Verfahren zur Herstellung von Preßlingen bekannt, in dem Kieselsol als Bindemittel verwendet wird.

Aus der DE-OS 34 06 185 ist ein Verfahren zur Herstellung von Preßlingen bekannt, indem man Glasurfrittenpulver als Bindemittel und Glycerin als Gleitmittel verwendet.

Diese bekannten Verfahren haben den Nachteil, daß die erhaltenen Preßlinge für bestimmte katalytische Reaktionen nicht die gewünschten optimalen Eigenschaften, wie zum Beispiel ausreichende Bruchfestigkeit, aufweisen.

Gegenstand der Erfindung sind Preßlinge auf Basis von pyrogen hergestelltem Aluminiumoxid mit den folgenden physikalisch-chemischen Kenndaten:

| | |
|---|---|
| Außendurchmesser | 2 bis 15 mm |
| BET-Oberfläche | 60 bis 115 $m^2$ / g |
| Porenvolumen | 0,30 bis 0,80 ml / g |
| Bruchfestigkeit | 100 bis 300 N |
| Porenverteilung | keine Poren <5 nm Durchmesser, mindestens 80 % der Poren im Bereich von 10 bis 40 nm Durchmesser |
| Zusammensetzung | 94 bis 99 Gew.-% $Al_2O_3$, Rest $SiO_2$ |

Die Preßlinge können in den verschiedensten Formen, wie z. B. zylindrisch, kugelförmig oder ringförmig, mit einem Außendurchmesser von 2 bis 15 mm vorliegen.

Ein weiterer Gegenstand der Erfindung ist ein Verfahren zur Herstellung von Preßlingen auf Basis von pyrogen hergestelltem Aluminiumoxid mit den folgenden physikalisch -chemischen Kenndaten:

| | |
|---|---|
| Außendurchmesser | 2 bis 15 mm |
| BET-Oberfläche | 60 bis 115 $m^2$ / g |
| Porenvolumen | 0,30 bis 0,80 ml / g |
| Bruchfestigkeit | 100 bis 300 N |
| Porenverteilung | keine Poren <5 nm Durchmesser, mindestens 80 % der Poren im Bereich von 10 bis 40 nm Durchmesser |
| Zusammensetzung | 94 bis 99 Gew.-% $Al_2O_3$, Rest $SiO_2$ |

welches dadurch gekennzeichnet ist, daß man pyrogen hergestelltes Aluminiumoxid mit Kaolin und/oder Graphit, Harnstoff, Wachs, Zucker, Stärke unter Zusatz von Wasser homogenisiert, bei einer Temperatur von 80 bis 120 °C trocknet, zu einem Pulver zerkleinert, das Pulver zu Preßlingen verpreßt und während eines Zeitraumes von 0,5 bis 6 Stunden bei einer Temperatur von 400 bis 1200 °C tempert.

In einer besonderen Ausführungsform der Erfindung kann die Mischung vor dem Verpressen die folgenden Zusammensetzungen aufweisen:

50 - 90 Gew.-% Aluminiumoxid, vorzugsweise 60 - 85.-%,

0,1 - 10 Gew.-% Kaolin, vorzugsweise1 - 5 Gew.-% und/oder

0,1 - 10 Gew.-% Graphit, vorzugsweise 1 - 5 Gew.-%,

0,1 - 10 Gew.-% Wachs, vorzugsweise 1 -5 Gew.-%,

5 - 45 Gew.-% Harnstoff, vorzugsweise 8 - 40 Gew.-%.

Kaolin muß bei dem erfindungsgemäßen Verfahren eingesetzt werden, weil sonst die Bruchfestigkeit der Preßlinge nicht ausreichend ist (vgl. Beispiel 3).

Zur Durchführung des erfindungsgemäßen Verfahrens sind prinzipiell alle Mischer oder Mühlen geeignet, die eine gute Homogenisierung ermöglichen, wie z. B. Schaufel-, Wirbelschicht-, Kreisel- oder Luftstrommischer. Besonders geeignet sind Mischer, mit denen eine zusätzliche Verdichtung des Mischgutes möglich ist, z. B. Pflugscharmischer, Kollergänge oder Kugelmühlen. Nach dem Homogenisieren kann eine weitgehende Trocknung bei 80 - 120 °C erfolgen, so daß man nach dem Zerkleinern ein rieselfähiges Pulver erhält. Die Herstellung der Preßlinge kann auf Stempelpressen, Exzenterpressen, Strangpressen oder Rundlaufpressen als auch auf Kompaktoren erfolgen.

Die Preßlinge werden bei 400 - 1200 °C 30 Minuten bis 6 Stunden getempert.

Durch Variation der Einsatzstoffmengen und des Preßdruckes kann die Bruchfestigkeit, die spez. Gesamtoberfläche und das Porenvolumen in einem gewissen Rahmen verändert werden.

Die erfindungsgemäßen Preßlinge können entweder direkt als Katalysatoren Verwendung finden oder als Katalysatorträger, indem die Formkörper während oder nach ihrer Herstellung mit einer Lösung einer katalytisch wirksamen Substanz getränkt und ggf. durch eine geeignete Nachbehandlung aktiviert werden. In einer besonders vorteilhaften Weise können die erfindungsgemäßen Preßlinge nach Belegung mit Palladium als Katalysator für die selektive Hydrierung von Acetylen eingesetzt werden.

Die erfindungsgemäßen Preßlinge weisen die folgenden Vorteile auf:

Hohe Festigkeit

Hohes Porenvolumen

Der überwiegende Anteil der Poren liegt im Bereich von 10 bis 40 nm

keine Poren < 5 nm

Beispiele

Als pyrogen hergestelltes Aluminiumoxid wird ein Aluminiumoxid mit den folgenden physikalisch-chemischen Kenndaten eingesetzt:

| | $Al_2O_3$ C |
|---|---|
| Oberfläche nach BET $m^2$ / g | 100 ± 15 |
| Mittlere Größe der Primärteilchen nm | 20 |
| Stampfdichte [1] normale Ware g / l | ca. 60 |
| Trocknungsverlust [2] (2 Stunden bei 105 °C) % | <5 |
| Glühverlust [2)5] (2 Stunden bei 1000 °C) % | <3 |
| pH-Wert[3] (in 4 %iger wäßriger Dispersion) | 4 - 5 |
| $SiO_2$ [6] % | <0,1 |
| $Al_2O_3$ [6] % | 99,6 |
| $Fe_2O_3$ [6] % | <0,2 |
| $TiO_2$ [6] % | <0,1 |
| HCl [6)8] % | <0,5 |
| Siebrückstand [4] % | <0,05 |

1) nach DIN 53 194
2) nach DIN 55 921
3) nach DIN 53 200
4) nach DIN 53 580
5) bezogen auf die 2 Stunden bei 105 °C getrocknete Substanz
6) bezogen auf die 2 Stunden bei 1000 °C geglühte Substanz
8) HCl-Gehalt ist Bestandteil des Glühverlustes

Die BET-Oberfläche wird gemäß DIN 66 131 mit Stickstoff bestimmt.

Das Porenvolumen wird rechnerisch aus der Summe der Mikro-, Meso- und Makroporen ermittelt.

Die Bruchfestigkeit wird mittels eines Bruchfestigkeitstesters der Fa. Ewerka, Typs TBH 28, bestimmt.

Die Bestimmung der Mikro- und Mesoporen erfolgt durch Aufnahme einer $N_2$-Isotherme und deren Auswertung nach BET, de Boer und Barret, Joyner, Halenda.

Die Bestimmung der Makroporen erfolgt durch das Hg-Einpreßverfahren.

Beispiel 1

83,3 Gew.-% Teile Aluminiumoxid C
4,2 Gew.-% Teile Graphit
4,2 Gew.-% Teile Kaolin
8,3 Gew.-% Teile Harnstoff

werden in einem Mischer mit Wasser homogenisiert. Die erhaltene Mischung wird bei 100 °C getrocknet und durch ein Sieb mit 1 mm Maschenweite gedrückt.

Die Verpressung erfolgt auf einer Rundläuferschnellpresse (Firma Fette). Die Rohtabletten werden bei 800 °C während 2 Stunden getempert.

Die erhaltenen Preßlinge weisen die folgenden physikalisch -chemischen Kenndaten auf:
Außendurchmesser: Durchmesser 5 mm, Höhe 5,9 mm
Bruchfestigkeit: 300 N
spez. Oberfläche: 70 $m^2$ / g
Porenvolumen: 0,4 ml / g
Porenverteilung: keine Poren <5 nm Durchmesser, 84 % der Poren im Bereich von 10 bis 40 nm Durchmesser
Zusammensetzung: 97,5 Gew.-% $Al_2O_3$ 2,5 Gew.-% $SiO_2$

Beispiel 2

63 Gew.-% Aluminiumoxid C
31 Gew.-% Harnstoff
3 Gew.-% Kaolin und
3 Gew.-% Graphit werden unter Zusatz von Wasser gemäß Beispiel 1 zu Preßlingen verarbeitet. Die erhaltenen Preßlinge weisen die folgenden physikalisch-chemischen Kenndaten auf:

| | |
|---|---|
| Außendurchmesser | 9 mm |
| BET-Oberfläche | 81 $m^2$ / g |
| Porenvolumen | 0,61 ml / g |
| Porenverteilung | keine Poren <5 nm Durchmesser, 82 % der Poren im Bereich von 10 bis 40 nm Durchmesser |
| Bruchfestigkeit | 120 N |
| Zusammensetzung | 98 Gew.-% $Al_2O_3$ 2 Gew.-% $SiO_2$ |

Beispiel 3 (Vergleichsbeispiel)

50 Gew.-% Aluminiumoxid C
45 Gew.-% Harnstoff und
5 Gew.-% Wachs werden unter Zusatz von Wasser gemäß Beispiel 1 zu Preßlingen verarbeitet. Die Temperung erfolgt bei 700 °C.

Die erhaltenen Preßlinge weisen die folgenden physikalisch -chemischen Kenndaten auf:

| | |
|---|---|
| Außendurchmesser | 9 mm |
| BET-Oberfläche | 100 $m^2$ / g |
| Porenvolumen | 0,8 ml / g |
| Porenverteilung | keine Poren <5 nm Durchmesser |
| Bruchfestigkeit | 19 N |
| Zusammensetzung | 100 % $Al_2O_3$ |

**Patentansprüche**

1. Preßlinge auf Basis von pyrogen hergestelltem Aluminiumoxid mit den folgenden physikalischchemischen Kenndaten:

| | |
|---|---|
| Außendurchmesser | 2 bis 15 mm |
| BET-Oberfläche | 60 bis 115 m$^2$ / g |
| Porenvolumen | 0,30 bis 0,80 ml / g |
| Bruchfestigkeit | 100 bis 300 N |
| Porenverteilung | keine Poren <5 nm Durchmesser, mindestens 80 % der Poren im Bereich von 10 bis 40 nm Durchmesser |
| Zusammensetzung | 94 bis 99 Gew.-% Al$_2$O$_3$, Rest SiO$_2$ |

2. Verfahren zur Herstellung von Preßlingen auf Basis von pyrogen hergestelltem Aluminiumoxid mit den folgenden physikalisch-chemischen Kenndaten:

| | |
|---|---|
| Außendurchmesser | 2 bis 15 mm |
| BET-Oberfläche | 60 bis 115 m$^2$ / g |
| Porenvolumen | 0,30 bis 0,80 ml / g |
| Bruchfestigkeit | 100 bis 300 N |
| Porenverteilung | keine Poren <5 nm Durchmesser, mindestens 80 % der Poren im Bereich von 10 bis 40 nm Durchmesser |
| Zusammensetzung | 94 bis 99 Gew.-% Al$_2$O$_3$, Rest SiO$_2$ |

dadurch gekennzeichnet, daß man pyrogen hergestelltes Aluminiumoxid mit Kaolin und/oder Graphit, Harnstoff, Zucker, Stärke, Wachs unter Zusatz von Wasser homogenisiert, bei einer Temperatur von 80 bis 120 °C trocknet, zu einem Pulver zerkleinert, das Pulver zu Preßlingen verpreßt und während eines Zeitraumes von 0,5 bis 6 Stunden bei einer Temperatur von 400 bis 1200 °C tempert.

3. Verwendung der Preßlinge gemäß Anspruch 1 als Katalysatorträger und Katalysator.

**Claims**

1. Compacts based on pyrogenically prepared aluminium oxide and having the following physical-chemical characteristic data:

| | |
|---|---|
| External diameter | 2 to 15 mm |
| BET surface area | 60 to 115 m$^2$/g |
| Pore volume | 0.30 to 0.80 ml/g |
| Breaking strength | 100 to 300 N |
| Pore distribution | no pores <5 nm in diameter, at least 80% of the pores in the range 10 to 40 nm in diameter |
| Composition | 94% to 99% by weight of Al$_2$O$_3$, remainder SiO$_2$ |

2. Process for the production of compacts based on pyrogenically prepared aluminium oxide and having the following physical-chemical characteristic data:

| | |
|---|---|
| External diameter | 2 to 15 mm |
| BET surface area | 60 to 115 m$^2$/g |
| Pore volume | 0.30 to 0.80 ml/g |
| Breaking strength | 100 to 300 N |
| Pore distribution | no pores <5 nm in diameter, at least 80% of the pores in the range 10 to 40 nm in diameter |
| Composition | 94% to 99% by weight of Al$_2$O$_3$, remainder SiO$_2$ |

characterised in that pyrogenically prepared aluminium oxide is homogenised with kaolin and/or graphite, urea, sugar, starch or wax with addition of water, the mixture is dried at a temperature of from 80 to 120°C and comminuted to form a powder, the powder is pressed to form compacts, and the compacts are conditioned at a temperature of from 400 to 1,200°C for a period of 0.5 to 6 hours.

3. Use of the compacts according to Claim 1 as a catalyst support or catalyst.

**Revendications**

1. Comprimés à base d'oxyde d'aluminium préparé par pyrogénation, ayant les caractéristiques physico-chimiques suivantes :

| | |
|---|---|
| diamètre extérieur | 2 - 15 mm |
| Surface BET | 60 - 115 $m^2$/g |
| Volume de pores | 0,30 - 0,80 ml/g |
| Résistance à la rupture | 100 - 300 N |
| Distribution des pores | aucun pore de diamètre < 5 nm au moins 80 % des pores dans la plage de diamètres de 10 - 40 nm, |
| Composition | de 94 à 99 % en poids de $Al_2O_3$, le reste étant constitué de $SiO_2$. |

2. Procédé pour la composition de comprimés à base d'oxyde d'aluminium préparé par pyrogénation, ayant les caractéristiques physico-chimiques suivantes:

| | |
|---|---|
| diamètre extérieur | 2 - 15 mm |
| Surface BET | 60 - 115 $m^2$/g |
| Volumes de pores | 0,30 - 0,80 ml/g |
| Résistance à la rupture | 100 - 300 N |
| Distribution des pores | aucun pore de diamètre < 5 nm au moins 80 % des pores dans la plage de diamètres de 10 à 40 nm, |
| Composition | de 94 à 99 % en poids de $Al_2O_3$, le reste étant constitué de $SiO_2$, |

caractérisé en ce que l'on homogénéise de l'oxyde d'aluminium, préparé par pyrogénation, avec du Kaolin et/ou du graphite, de l'urée, du sucre, de l'amidon, de la cire, avec addition d'eau, qu'on le fragmente en une poudre, qu'on comprime la poudre en comprimés et qu'on soumet les comprimés à un traitement thermique à une température de 400 à 1200°C pendant une durée de 0,5 à 6 heures.

3. Utilisation des comprimés selon la revendication 1, en tant que support de catalyseur et catalyseur.